# EUROPÄISCHE PATENTANMELDUNG

(11) **EP 1 209 499 A2**
(43) Veröffentlichungstag der Anmeldung: **29.05.2002**
(21) Anmeldenummer: 01127648.2
(22) Anmeldetag: 20.11.2001
(51) Int. Cl.: G02B 7/00, G02B 3/00

(54) **Verfahren zur Herstellung einer mikrooptischen Funktionseinheit**

(30) Priorität: 23.11.2000 DE 10058074
(71) Anmelder: Lissotschenko, Vitalij, Dr., 44149 Dortmund (DE); Hentze, Joachim, 59457 Werl (DE)
(72) Erfinder: Lissotschenko, Vitalij, Dr., 44149 Dortmund (DE)
(74) Vertreter: Basfeld, Rainer, Dr. Dipl.-Phys.

(57) **Zusammenfassung**

Verfahren zur Herstellung einer mikrooptischen Funktionseinheit, die aus mindestens zwei miteinander verbundenen Teilen besteht, die jeweils mindestens ein optisches Funktionselement umfassen, wobei für die Herstellung mindestens zwei flächige Teile (1, 2) mit einer Anzahl von optisch funktionalen Abschnitten (Linsenflächen 3, 4, 5) versehen werden, wobei in einem weiteren Verfahrensschritt die flächigen Teile (1, 2) miteinander verbunden werden und wobei in einem weiteren Verfahrensschritt aus den miteinander verbundenen flächigen Teilen (1, 2) mindestens eine mikrooptische Funktionseinheit (14) herausgeschnitten wird, wobei auf den einander zugewandten Seiten der flächigen Teile (1, 2) Positionierhilfen ausgebildet werden, die eine Ausrichtung der mindestens zwei flächigen Teile (1, 2) zueinander erleichtern.

## Beschreibung

Die vorliegende Erfindung betrifft ein Verfahren zur Herstellung einer mikrooptischen Funktionseinheit, die aus mindestens zwei miteinander verbundenen Teilen besteht, die jeweils mindestens ein optisches Funktionselement umfassen, wobei für die Herstellung mindestens zwei flächige Teile mit einer Anzahl von optisch funktionalen Abschnitten versehen werden, wobei in einem weiteren Verfahrensschritt die flächigen Teile miteinander verbunden werden und wobei in einem weiteren Verfahrensschritt aus den miteinander verbundenen flächigen Teilen mindestens eine mikrooptische Funktionseinheit herausgeschnitten wird.

Ein Verfahren der vorgenannten Art ist beispielsweise aus dem US-Patent US 6,049,430 bekannt. Bei dem darin beschriebenen Verfahren werden zwei waferähnliche Teile mit optischen Funktionselementen versehen und mittels UV-härtbaren Klebstoffes miteinander verbunden. Als nachteilig dabei erweist sich, dass ein beträchtlicher Aufwand betrieben werden muß, um die an den waferähnlichen Teilen ausgebildeten optischen Funktionselemente des einen flächigen Teils zu denen des anderen flächigen Teils exakt so zu positionieren, dass eine mikrooptische Funktionseinheit mit den gewünschten Eigenschaften entsteht.

Das der vorliegenden Erfindung zugrundeliegende Problem ist die Schaffung eines Verfahrens der eingangs genannten Art, bei den die an unterschiedlichen flächigen Teilen ausgebildeten optisch funktionalen Abschnitte während des Herstellungsverfahrens einfacher in der gewünschten Weise zueinander positioniert werden können.

Dies wird erfindungsgemäß dadurch erreicht, dass auf den einander zugewandten Seiten der flächigen Teile Positionierhilfen ausgebildet werden, die eine Ausrichtung der mindestens zwei flächigen Teilen zueinander erleichtern. Durch das Vorhandensein von Positionierhilfen können die makroskopischen flächigen Teile den gewünschten Vorgaben entsprechend zueinander ausgerichtet werden, wobei die Positionierhilfen so gewählt werden können, dass als Konsequenz der korrekten Ausrichtung der flächigen Teile zueinander die funktionalen Abschnitte der jeweiligen mikrooptischen Funktionseinheit exakt zueinander positioniert sind.

Erfindungsgemäß kann weiterhin vorgesehen sein, dass auch auf mindestens einer von dem jeweils anderen Teil abgewandten Seite mindestens eines der Teile Positionierhilfen ausgebildet werden, die als Schneidehilfen für das Herausschneiden des mindestens einen mikrooptischen Funktionselementes aus den miteinander verbundenen Teilen dienen können. Auf diese Weise wird auch der Arbeitsgang des Unterteilens der miteinander verbundenen flächigen Teile in einzelne Funktionseinheiten deutlich vereinfacht.

Gemäß einer bevorzugten Ausführungsform der vorliegenden Erfindung können an den einander zugewandten Seiten der flächigen Teile Anlageflächen ausgebildet werden, die nach dem Verbinden aneinander anliegen, wobei die Positionierhilfen an diesen Anlageflächen angeordnet sind. Durch die Ausbildung der Positionierhilfen in aneinander anliegenden Flächen können nach dem Aufeinanderzubewegen der flächigen Teile diese so lange aneinander verschoben werden, bis die entsprechende Position der Teile zueinander erzielt ist.

Vorteilhafterweise umfassen die Positionierhilfen Längsnuten an einem der Teile und dazu korrespondierende Längsvorsprünge an dem zweiten der Teile. Eine derartige Ausgestaltung der Positionierhilfen stellt eine sehr einfache aber trotzdem wirkungsvolle Ausführungsform dar. Weiterhin können derartige Längsnuten und Längsvorsprünge sehr kostengünstig eingebracht werden.

Das Verbinden der flächigen Teile miteinander kann durch gängige Verbindungsmethoden wie Kleben, Löten oder Schweißen erzielt werden.

Es kann insbesondere vorgesehen sein, dass die flächigen Teile aus einem Material bestehen, das in dem für die Funktionsweise der fertigen mikrooptischen Funktionseinheiten interessierenden Wellenlängenbereich zumindest teilweise transparent ist. In diesem Fall können an mindestens einem der flächigen Teile als Linsenflächen ausgeformte optisch funktionale Abschnitte ausgebildet werden. Vorteilhafterweise können die Linsenflächen als sich im wesentlichen über die gesamte Breite bzw. Länge des jeweiligen flächigen Teils erstreckende Zylinderlinsen ausgebildet sein. Derartige Strukturen lassen sich fertigungstechnisch relativ einfach ausbilden.

Es besteht jedoch durchaus auch die Möglichkeit, als optisch funktionale Abschnitte Spiegel, Filter, Prismen oder dergleichen vorzusehen.

Gemäß einer bevorzugten Ausführungsform der vorliegenden Erfindung weisen die an mindestens einem der flächigen Teile ausgebildeten optisch funktionalen Abschnitte in mindestens einer in der Fläche des flächigen Teils liegenden Richtung bezüglich eines optischen Parameters zueinander unterschiedliche Eigenschaften auf, so dass aus den miteinander verbundenen Teilen mikrooptische Funktionseinheiten unterschiedlicher Eigenschaften herausgeschnitten werden können. Hierbei können die Eigenschaften der optisch funktionalen Abschnitte auf mindestens einem der flächigen Teile derart über die Länge und/oder die Breite des mindestens einen Teiles variieren, dass eine mikrooptische Funktionseinheit mit gewünschten Eigenschaften mittels eines adressierbaren Auswahlverfahrens aus den miteinander verbundenen Teilen herausgeschnitten werden kann. Damit können die flächigen Teile miteinander verbunden werden und bei entsprechender Kundenanforderung eine oder mehrere Funktionseinheiten mit genau definierbaren Eigenschaften aus der waferähnlichen Struktur herausgeschnitten werden. Ein derartiges Verfahren stellt eine sehr kostengünstige Möglichkeit dar, kundenspezifische mikrooptische Funktionseinheiten herzustellen.

Vorzugsweise können dabei über die Länge und/oder die Breite mindestens eines der flächigen Teile der Brechungsindex des verwendeten Materials oder die Brennweite der als Linsenflächen ausgeführten optisch funktionalen Abschnitte variieren. Bei einer oder beider der vorgenannte Variationen können beispielsweise mittels des vorgenannten adressierbaren Auswahlverfahrens mikrooptische Funktionseinheiten mit Linsen unterschiedlicher Brechungsindex entsprechend der gewünschten Spezifikation selektiv herausgeschnitten.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische schematische Ansicht auf zwei in einem ersten erfindungsgemäßen Verfahrensschritt zusammenzufügende flächige Teile;
- Fig. 2: eine Ansicht gemäß Figur 1 nach dem Zusammenfügen und vor dem Schneiden der Teile;
- Fig. 3: eine perspektivische Ansicht auf eine mit dem erfindungsgemäßen Verfahren hergestellte mikrooptische Funktionseinheit;
- Fig. 4: eine Detailansicht gemäß dem mit IV bezeichneten Kreis in Figur 1;
- Fig. 5: eine Detailansicht gemäß dem Pfeil V in Figur 1.

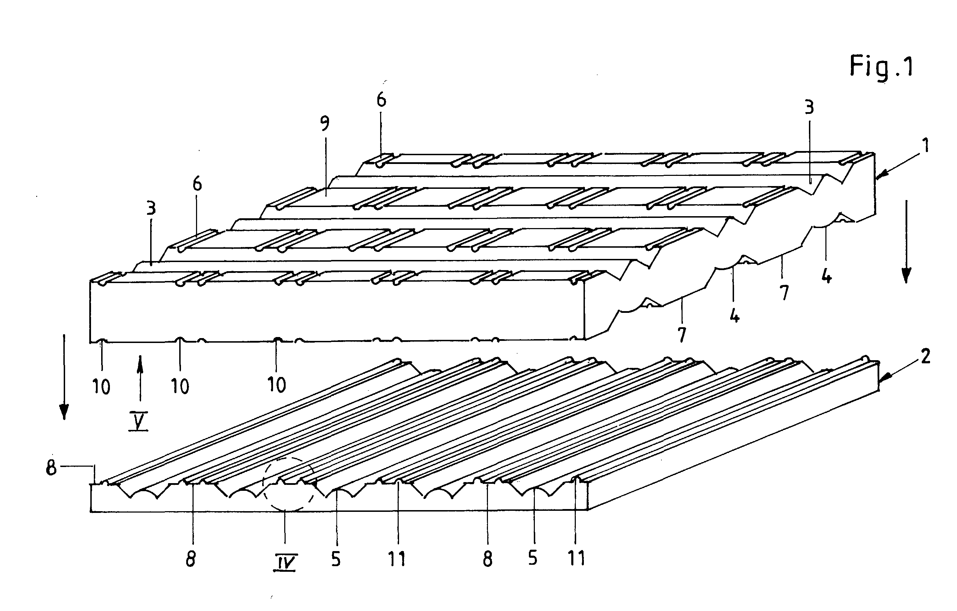

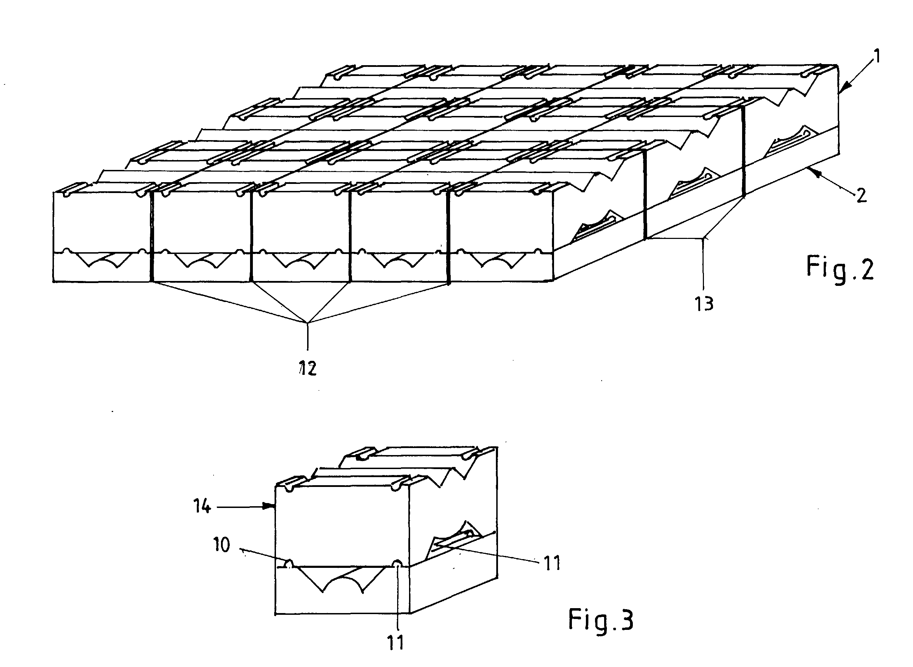

Bei einem in den Figuren 1 und 2 abgebildeten erfindungsgemäßen Verfahren wird von relativ ausgedehnten waferähnlichen flächigen Teilen 1, 2 aus einem Material, das in dem für die Funktionsweise der fertigen mikrooptischen Funktionseinheit interessierenden Wellenlängenbereich zumindest teilweise transparent ist. Es kann sich hierbei beispielsweise um Quarzglas oder dergleichen handeln. Beide oder jeweils nur eine der ausgedehnten Oberflächen der flächigen Teile 1, 2 können mittels eines Herstellungsverfahrens, wie es beispielsweise in der deutschen Offenlegungsschrift DE 196 10 881 A1 beschrieben ist, derart behandelt werden, dass Linsenflächen 3, 4, 5 entsprechend Figur 1 erzeugt werden. Bei einem derartigen Herstellungsverfahren können die Quarzglasflächen beispielsweise vermittels Ultraschall-Schwingläppen grob ausgeformt werden. Zur Herstellung der aus Figur 1 ersichtlichen periodisch wiederkehrenden Linsenstrukturen können dazu großflächige Läppformen verwendet werden, die jeweils nebeneinander angeordnete Funktionselemente für das Ultraschall-Schwingläppen aufweisen.

An das Ultraschall-Schwingläppen kann sich dann ein weiterer Verfahrensschritt anschließen, bei dem vermittels eines Hochenergie-Elektronenstrahls die Linsenflächen 3, 4, 5 poliert werden können.

In dem abgebildeten Ausführungsbeispiel weist das erste flächige Teil 1 auf seinen beiden ausgedehnten Oberflächen jeweils Linsenflächen 3, 4 auf, die in dem abgebildeten Ausführungsbeispiel als einander gegenüberliegende unterschiedlich geformte parallel zueinander ausgerichtete Zylinderlinsen ausgebildet sind. In dem abgebildeten Ausführungsbeispiel erstrecken sich die an dem ersten flächigen Teil 1 ausgebildeten Zylinderlinsen jeweils über die gesamte Breite des flächigen Teils 1. Jeweils zwischen den Linsenflächen 3, 4 sind an der jeweiligen ausgedehnten Oberfläche des flächigen Teils 1 sich in Richtung der Zylinderachsen erstreckende im wesentlichen zu der Erstreckungsebene des flächigen Teils parallele Anlageflächen 6, 7 vorgesehen, die hinsichtlich ihrer Dicke die Linsenflächen 3, 4 jeweils nach oben bzw. nach unten überragen.

An dem zweiten flächigen Teil 2 sind in dem abgebildeten Ausführungsbeispiel nur auf der dem ersten flächigen Teil 1 zugewandten Seite Linsenflächen 5 und Anlageflächen 8 angeordnet. Bei den Linsenflächen 5 handelt es sich wiederum um Zylinderlinsenflächen, die parallel zueinander ausgerichtete Zylinderachsen aufweisen und bei denen sich jeweils eine der Zylinderlinsen über die gesamte Breite des flächigen Teils 2 erstreckt. Jeweils zwischen den einzelnen Linsenflächen 5 sind Anlageflächen 8 angeordnet, die wiederum nach oben die Linsenflächen 5 überragen.

Die in Figur 1 abgebildete Ausgestaltung der beiden flächigen Teile 1, 2 ist beispielhaft und kann durchaus variiert werden. Es besteht zum Beispiel die Möglichkeit auch bei dem flächigen Teil 1 nur eine der beiden ausgedehnten Flächen mit Linsenflächen 3, 4 und Anlageflächen 6, 7 zu versehen. Weiterhin besteht natürlich auch die Möglichkeit bei dem flächigen Teil 2 beide ausgedehnte Seiten mit Linsenflächen 5 und Anlageflächen 8 zu versehen, und dies unabhängig davon, ob bei dem flächigen Teil 1 eine oder beide Seiten mit entsprechenden Funktionsflächen versehen sind.

In dem in Figur 1 abgebildeten Ausführungsbeispiel sind die an dem zweiten flächigen Teil 2 vorgesehen Zylinderlinsen senkrecht zu den an dem ersten flächigen Teil 1 vorgesehen Zylinderlinsen ausgerichtet. Es besteht durchaus die Möglichkeit, an beiden Teilen 1, 2 Zylinderlinsen in zueinander parallelen Richtungen auszurichten. Weiterhin besteht auch die Möglichkeit, Zylinderlinsen in einem anderen als einem rechten Winkel zueinander anzuordnen. Weiterhin besteht auch die Möglichkeit, abschnittsweise nicht zylindrische sondern sphärische Linsenflächen oder dergleichen vorzusehen. Weiterhin können auch anstelle von Linsenflächen Prismenflächen in die flächigen Oberflächen der Teile 1, 2 eingebracht werden. Anstelle von Linsen oder Prismen können auch Spiegel oder Filter als Funktionsflächen verwendet werden. Erfindungswesentlich ist nicht die Strukturierung der Funktionsflächen an den Teilen 1, 2 sondern die Tatsache, dass an den Teilen 1, 2 die gewünschte Art von Funktionsflächen, entweder einseitig und/oder beidseitig, vorhanden ist.

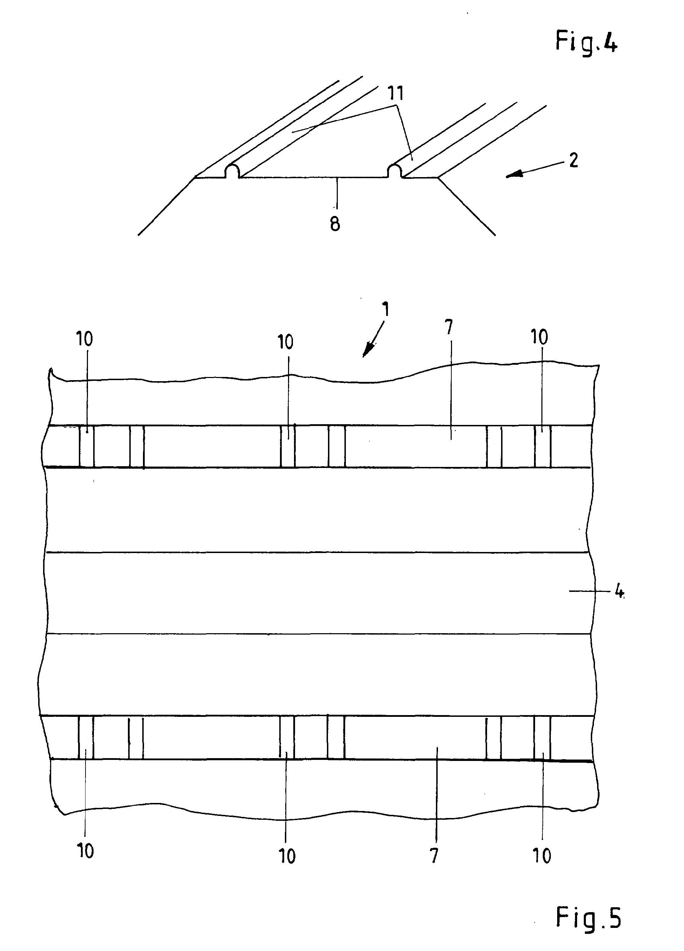

Weiterhin ist aus Figur 1 sowie aus den Detailansichten in Figur 4 und Figur 5 ersichtlich, dass an den Teilen 1, 2 Positionierhilfen angebracht sind. Diese Positionierhilfen umfassen Längsnuten 9, 10, die sich an dem ersten der Teile 1 senkrecht zu den Zylinderlinsen der Linsenflächen 3, 4 und auch senkrecht zu der Längserstreckung der Anlageflächen 6, 7 erstrecken. Zu den in Figur 1 unteren Längsnuten 10 des ersten flächigen Teils 1 korrespondierende Längsvorsprünge 11 sind auf den Anlageflächen 8 des Teiles 2 angebracht, wie dies insbesondere aus Figur 4 deutlich erkennbar ist.

Bei dem Zusammenfügen der beiden Teile 1, 2 greifen die Längsvorsprünge 11 in die Längsnuten 10, so dass eine vorgegebene Orientierung der als Linsenflächen 3, 4, 5 ausgebildeten Funktionsflächen an den Teilen 1, 2 gewährleistet wird. Die auf der in Figur 1 oberen Seite des ersten flächigen Teils 1 angeordneten zusätzlichen Längsnuten 9 können zum einen für das Zusammenfügen mit einem dritten oder vierten flächigen Teil dienen, dass beispielsweise auf die Oberseite des ersten flächigen Teils 1 aufgesetzt wird. Weiterhin können die an der Oberseite des ersten flächigen Teils 1 vorgesehen Längsnuten 9 jedoch auch dazu dienen, ein entsprechendes Schneidwerkzeug auf der Oberseite der zusammengefügten Teile 1, 2 zu positionieren.

Das nach dem Fügen Miteinander-Verbinden der Teile 1, 2 kann durch typische Verbindungsverfahren wie beispielsweise Kleben, Löten oder Schweißen erzielt werden.

Nach dem Zusammenfügen und Miteinander-Verbinden der Teile 1, 2 werden vermittels der vorgenannten Schneidvorrichtung längs der Schnittlinien 12, 13 bausteinähnliche mikrooptische Funktionseinheiten 14 herausgeschnitten.

Es besteht erfindungsgemäß die Möglichkeit, vermittels des erfindungsgemäßen Verfahrens sehr unterschiedliche mikrooptische Funktionseinheiten 14 aus den gleichen Ausgangsteilen 1, 2 herzustellen. Dazu können beispielsweise die Brennweiten oder andere Parameter der eingebrachten Funktionsflächen, wie beispielsweise der Linsenflächen 3, 4, 5, über die Länge bzw. die Breite der Teile 1, 2 oder eines der Teile 1, 2 variieren. Alternativ könnte beispielsweise auch der Brechungsindex des verwendeten Materials über die Länge und/oder die Breite eines oder beider der Teile 1, 2 variieren. Bei einer derartigen Variation optischer Parameter der Funktionsflächen kann eine mikrooptische Funktionseinheit 14 mit den gewünschten Eigenschaften beispielsweise mittels eines adressierbaren Auswahlverfahrens aus den zusammengefügten Teilen 1, 2 herausgeschnitten werden.

## Patentansprüche

1. Verfahren zur Herstellung einer mikrooptischen Funktionseinheit, die aus mindestens zwei miteinander verbundenen Teilen besteht, die jeweils mindestens ein optisches Funktionselement umfassen, wobei für die Herstellung mindestens zwei flächige Teile (1, 2) mit einer Anzahl von optisch funktionalen Abschnitten (Linsenflächen 3, 4, 5) versehen werden, wobei in einem weiteren Verfahrensschritt die flächigen Teile (1, 2) miteinander verbunden werden und wobei in einem weiteren Verfahrensschritt aus den miteinander verbundenen flächigen Teilen (1, 2) mindestens eine mikrooptische Funktionseinheit (14) herausgeschnitten wird, **dadurch gekennzeichnet, dass** auf den einander zugewandten Seiten der flächigen Teile (1, 2) Positionierhilfen ausgebildet werden, die eine Ausrichtung der mindestens zwei flächigen Teile (1, 2) zueinander erleichtern.

2. Verfahren nach Anspruch 1, **dadurch gekennzeichnet, dass** auch auf mindestens einer von dem jeweils anderen Teil (1, 2) abgewandten Seite mindestens eines der Teile (1, 2) Positionierhilfen ausgebildet werden, die als Schneidehilfen für das Herausschneiden des mindestens einen mikrooptischen Funktionselementes (14) aus den miteinander verbundenen Teilen (1, 2) dienen können.

3. Verfahren nach einem der Ansprüche 1 bis 2, **dadurch gekennzeichnet, dass** an den einander zugewandten Seiten der flächigen Teile (1, 2) Anlageflächen (7, 8) ausgebildet werden, die nach dem Verbinden aneinander anliegen, wobei die Positionierhilfen an diesen Anlageflächen (7, 8) angeordnet sind.

4. Verfahren nach einem der Ansprüche 1 bis 3, **dadurch gekennzeichnet, dass** die Positionierhilfen Längsnuten (9, 10) an einem der Teile (1) und dazu korrespondierende Längsvorsprünge (11) an dem zweiten der Teile (2) umfassen.

5. Verfahren nach einem der Ansprüche 1 bis 4, **dadurch gekennzeichnet, dass** das Verbinden der flächigen Teile (1, 2) miteinander durch Kleben, Löten oder Schweißen erzielt wird.

6. Verfahren nach einem der Ansprüche 1 bis 5, **dadurch gekennzeichnet, dass** die flächigen Teile (1, 2) aus einem Material bestehen, dass in dem für die Funktionsweise der fertigen mikrooptischen Funktionseinheit (14) interessierenden Wellenlängenbereich zumindest teilweise transparent ist.

7. Verfahren nach einem der Ansprüche 1 bis 6, **dadurch gekennzeichnet, dass** an mindestens einem der flächigen Teile (1, 2) als Linsenflächen (3, 4, 5) ausgeformte optisch funktionale Abschnitte ausgebildet werden.

8. Verfahren nach Anspruch 7, **dadurch gekennzeichnet, dass** die Linsenflächen (3, 4, 5) als sich im wesentlichen über die gesamte Breite bzw. Länge des jeweiligen flächigen Teils (1, 2) erstreckende Zylinderlinsen ausgebildet sind.

9. Verfahren nach einem der Ansprüche 1 bis 8, **dadurch gekennzeichnet, dass** die an mindestens einem der flächigen Teile (1, 2) ausgebildeten optisch funktionalen Abschnitte in mindestens einer in der Fläche des flächigen Teiles (1, 2) liegenden Richtung bezüglich eines optischen Parameters zueinander unterschiedliche Eigenschaften aufweisen, so dass aus den miteinander verbundenen Teilen (1, 2) mikrooptische Funktionseinheiten (14) unterschiedlicher Eigenschaften herausgeschnitten werden können.

10. Verfahren nach Anspruch 9, **dadurch gekennzeichnet, dass** die Eigenschaften der optisch funktionalen Abschnitte auf mindestens einem der flächigen Teile (1, 2) derart über die Länge und / oder die Breite des mindestens einen Teiles (1, 2) variieren, dass eine mikrooptische Funktionseinheit (14) mit gewünschten Eigenschaften mittels eines adressierbaren Auswahlverfahrens aus den miteinander verbundenen Teilen (1, 2) herausgeschnitten werden kann.

11. Verfahren nach einem der Ansprüche 9 oder 10, **dadurch gekennzeichnet, dass** über die Länge und / oder die Breite mindestens eines der flächigen Teile (1, 2) der Brechungsindex des verwendeten Materials oder die Brennweite der als Linsenflächen (3, 4, 5) ausgeführten optisch funktionalen Abschnitte variieren.
